# EUROPEAN PATENT APPLICATION

(11) **EP 2 336 960 A1**
(43) Date of publication of application: **22.06.2011**
(21) Application number: 09368048.6
(22) Date of filing: 14.12.2009
(51) Int. Cl.: G06Q 10/00

(54) **Multi-destination trip selection**

(71) Applicant: Amadeus S.A.S., 06410 Biot (FR)
(72) Inventor: Jiang, Donghua, 06200 Nice (FR); Dufresne, Thierry, 06650 Opio (FR); Patoureaux, Marc, 06130 Grasse (FR)
(74) Representative: Coret, Sophie V.G.A.

(57) **Abstract**

A method of selecting at least one trip from a plurality of possible trips, each of the plurality of possible trips being for travel from an origin location and comprising stops at a plurality of destinations. The method is performed in computer apparatus configured to execute the method. The method comprises: determining a fare for each of a plurality of different leg options for each leg, each leg being between one of: the origin location and a destination; and two destinations; selecting a plurality of candidate leg options for each leg based on comparative amounts of the determined fares, the plurality of candidate leg options being fewer in number than the plurality of different leg options; and determining at least one trip based on the plurality of candidate leg options for each leg.

## Description

### Field of the invention

The present invention relates to a method of selecting at least one trip from a plurality of possible trips from an origin location and comprising stops at a plurality of destinations.

### Background to the invention

Customers of travel companies often wish to plan a trip from an origin airport to a destination airport with a stop-over at one and sometimes more than one intermediate destination airport. Factors such as different fares provided by different carriers, different departure times on a particular day of travel, flexibility of length of stay at an intermediate destination airport, different classes of travel, e.g. economy versus premium economy, and travelling via a connecting airport rather than travelling direct between two airports mean that a large number of options invariably need to be considered. The cost of a trip is usually of primary importance to customers. Hence, presenting a customer with a number of itineraries that meet customer requirements and that are cost efficient typically involves constructing a large number of options and sorting the options as regards cost.

Computer operable methods to analyse and sort simple itineraries, such as between an origin airport and a destination airport, are known. For example, US 2003/084011 describes a method of determining the lowest cost trip between two predetermined locations by minimising distance travelled and minimising time of travel between the two predetermined locations. The lowest cost trip is determined on the basis of the minimisation of distance travelled and time of travel. However, such known computer operable methods are incapable of dealing with more complicated itineraries, which involve, for example, a stop-over at each of two intermediate destination airports such that an itinerary involves three or more legs instead of the simple, two leg itinerary or a request involving an open search that returns bookable options.

### Object of the invention

The present inventors have appreciated that a computer operable method of analysing and sorting more complicated itineraries is liable to involve identifying a large number of permutations of legs for a particular itinerary or trip or request involving an open search and carrying out a large number of comparisons of identified legs before an organised set of options can be presented to a customer. Such steps of identifying permutations and carrying out comparisons are liable to present a significant if not insupportable computational burden. Indeed it may be impossible to identify all possible permutations, e.g. having regards to available computational resources.

It is therefore an object for the present invention to provide a method of selecting at least one trip from a plurality of possible trips, each of the plurality of possible trips being from an origin location and comprising stops at a plurality of destinations.

It is a further object for the present invention to provide computer apparatus operable to select at least one trip from a plurality of possible trips, each of the plurality of possible trips being from an origin location and comprising stops at a plurality of destinations.

### Statement of invention

The present invention has been devised in the light of the inventors' appreciation. According to a first aspect of the present invention, there is provided a method of selecting at least one trip from a plurality of possible trips, each of the plurality of possible trips being for travel from an origin location and comprising stops at a plurality of destinations, the method being performed in computer apparatus configured to execute the method and comprising:
determining a fare for each of a plurality of different leg options for each leg, each leg being between one of: the origin location and a destination; and two destinations;
selecting a plurality of candidate leg options for each leg based on comparative amounts of the determined fares, the plurality of candidate leg options being fewer in number than the plurality of different leg options; and
determining at least one trip based on the plurality of candidate leg options for each leg.

In use, the step of selecting a plurality of candidate options reduces the complexity of the step of determining at least one trip compared, for example, with the approach of determining at least one trip based on all the different leg options. Hence, the method of the present invention can provide for a significant reduction in computational burden. The phrase 'a stop at a destination' as used herein means a stop at the destination involving a stop over of at least one night. The phrase a stop at a destination is to be distinguished from a stop at a connecting location involving onwards travel to an intermediate or final destination. A connecting location may, for example, be a connection made at an airport during a leg between an origin airport and a destination airport. Where the plurality of destinations consists of two destinations neither destination is the same as the origin location.

More specifically, the plurality of destinations may comprise at least one intermediate destination and a final destination. Hence, each of the plurality of possible trips may be for travel between the origin location and a final destination and comprise stops at a plurality of intermediate destinations.

Alternatively or in addition, the plurality of destinations may comprise a plurality of intermediate destinations and a final destination. More specifically, the final destination may be the same as the origin location. Thus, the selected at least one trip may be a round trip.

Alternatively or in addition, the step of determining a fare for each of a plurality of different leg options may comprise determining a fare for each of different leg options between the origin location and each of the plurality of destinations and between different pairs of destinations. For example, travelling from a first destination to a second destination and travelling from a second destination to a first destination.

Alternatively or in addition, the selected plurality of candidate leg options for each leg may be the least expensive of the different leg options. In a form, a predetermined number of candidate leg options, such as seventy-five candidate leg options, may be selected from the different leg options for each leg. Thus, the method may, for example, be used to determine a set number of least expensive trips amongst all possible trips.

Alternatively or in addition, the steps of determining a fare and selecting a plurality of leg options may be executed at a same time. Thus, candidate leg options may be selected as fares for different leg options are being determined. For example, a fare for an indirect flight between two destinations may be compared with already selected candidate leg options and the fare for the indirect flight being included with the candidate leg options depending on the comparative cost.

Alternatively or in addition, the step of determining a fare for each of different leg options between different destinations may be executed in dependence on identities of the origin location and a final destination. A smaller number of different leg options may need to be considered depending on the identities of the origin location and a final destination.

Alternatively or in addition, the step of determining at least one trip may comprise determining a plurality of trips based on the plurality of candidate leg options for each leg.

More specifically, a plurality of candidate trips may be selected from the determined plurality of trips, the plurality of candidate trips being smaller in number than the determined plurality of trips. A predetermined number, such as two hundred candidate trips, may be selected.

More specifically, the steps of determining a plurality of trips and selecting a plurality of candidate trips may be executed at a same time. Thus, candidate trips may be selected as trips based on candidate leg options are determined.

Alternatively or in addition, the method may comprise operating on at least one heap data structure. The at least one heap data structure may contain a plurality of fares for a particular leg. Thus, there may be a plurality of heap data structures, each heap data structure containing a plurality of fares for a different leg. The at least one heap data structure may contain a plurality of trips determined from the plurality of candidate legs. Thus, there may be a plurality of heap data structures, each heap data structure containing a plurality of fares for a different leg and a further heap data structure containing a plurality of trips determined from the plurality of candidate legs.

Alternatively or in addition, the step of determining at least one trip may comprise constructing the at least one trip by a recursive operation. More specifically, the recursive operation may operate on a heap data structure.

Alternatively or in addition, the method may further comprise receiving, e.g. from a customer, length of stay data relating to a predetermined length of stay at at least one of the destinations. More specifically, the length of stay data may relate to a predetermined minimum length of stay.

Alternatively or in addition, the method may further comprise receiving, e.g. from a customer, identification data identifying the origin location and each of the destinations. Thus, the computer apparatus may be operative to fetch data from a data store in dependence on the received identification data. Data may be fetched from the data store only when the data needs to be evaluated, e.g. when comparing fares for different leg options. Thus, the computational burden may be reduced by means of such more efficient data handling. Data fetched from the data store may be stored in an intermediate data store, e.g. memory associated with a central processor, for subsequent processing. This is because data for a particular leg option may, for example, be evaluated several times. Data for a particular leg option may be evaluated several times because particular circumstances change, e.g. a fare for the leg option may differ on different days of travel.

More specifically, the method may further comprise receiving data specifying a predetermined order of travel to destinations. Hence, the step of selecting a plurality of candidate legs may be executed in dependence on the data specifying the predetermined order of destinations. Therefore, the number of the plurality of candidate leg options may be reduced in dependence on data specifying the predetermined order of destinations.

Alternatively or in addition, the method may further comprise receiving, e.g. from a customer, data identifying a first set of destinations, e.g. all European cities, and a predetermined number of destinations, e.g. three destinations, the predetermined number being smaller than the number of destinations in the first set. Thus, the plurality of candidate leg options may be selected in dependence on the data identifying the first set of destinations and the predetermined number. Hence, the method may be operable on the basis of a request involving an open search.

Alternatively or in addition, the steps of determining a fare, selecting a plurality of candidate leg options and determining at least one trip may be executed by a processor of the computer apparatus.

Alternatively or in addition, the step of determining a fare may comprise fetching data from data storage, e.g. from a fare database stored in data storage.

Alternatively or in addition, data formed during execution of at least one step of the method may be stored in computer memory forming part of the computer apparatus.

Alternatively or in addition, the step of selecting a plurality of candidate leg options may comprise determining whether or not a candidate leg option is bookable, e.g. available to purchase. If a candidate leg option is not bookable, the candidate leg option may not be selected.

In a preferred form, each of the origin location and the destinations may be airports.

According to a second aspect of the present invention, there is provided a computer program, which is at least one of embodied on a computer readable storage medium and carried on an electrical carrier signal, the computer program comprising computer executable code for causing computer apparatus to operate according to the first aspect of the present invention.

The computer readable storage medium may comprise at least one of a record medium, computer memory and read-only memory.

Further embodiments of the second aspect of the present invention may comprise one or more features of the first aspect of the present invention.

According to a third aspect of the present invention, there is provided computer apparatus operable to select at least one trip from a plurality of possible trips, each of the plurality of possible trips being for travel from an origin location and comprising stops at a plurality of destinations, the computer apparatus being configured to:
determine a fare for each of a plurality of different leg options for each leg, each leg being between a different one of the origin location and a destination and another of the origin location and a destination;
select a plurality of candidate leg options for each leg based on comparative amounts of the determined fares, the plurality of candidate leg options being fewer in number than the plurality of different leg options; and
determine at least one trip based on the plurality of candidate leg options for each leg.

More specifically, the computer apparatus may comprise an output device that is operative to output the determined at least one trip, e.g. to a user of the computer apparatus.

Alternatively or in addition, the computer apparatus may comprise an input device that is operable, e.g. by a user of the apparatus, to input data relating to the origin location and the destinations.

Further embodiments of the third aspect of the present invention may comprise one or more features of any previous aspect of the present invention.

According to a fourth aspect of the present invention, there is provided a distributed client-server architecture comprising computer apparatus according to the third aspect of the present invention.

### Brief description of the drawings

The present invention will now be described by way of example only with reference to the following drawings, of which:
Figure 1 is a block diagram showing the main functional components of the present invention;
Figure 2 is a block diagram representation of how the main functional components of the present invention operate with a specific example;
Figure 3 is a flow chart representation of a first part of a method according to the present invention; and
Figure 4 is a flow chart representation of a second part of the method according to the present invention.

### Specific description

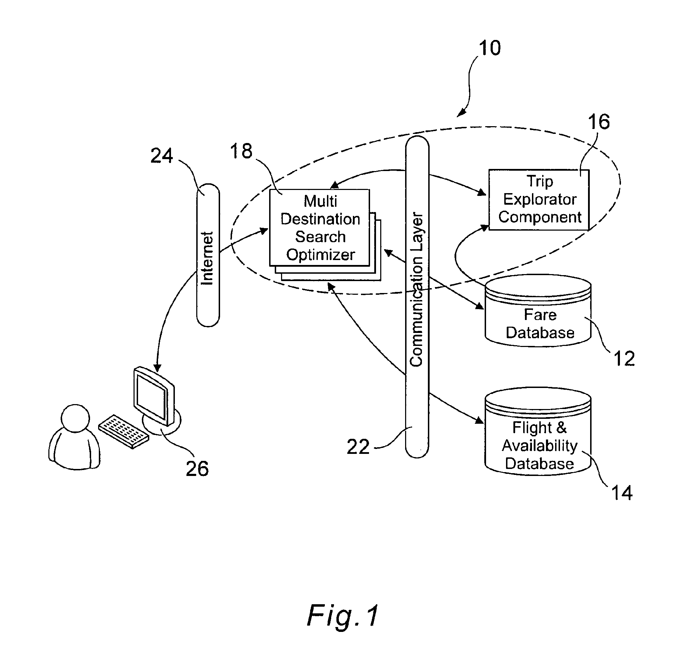

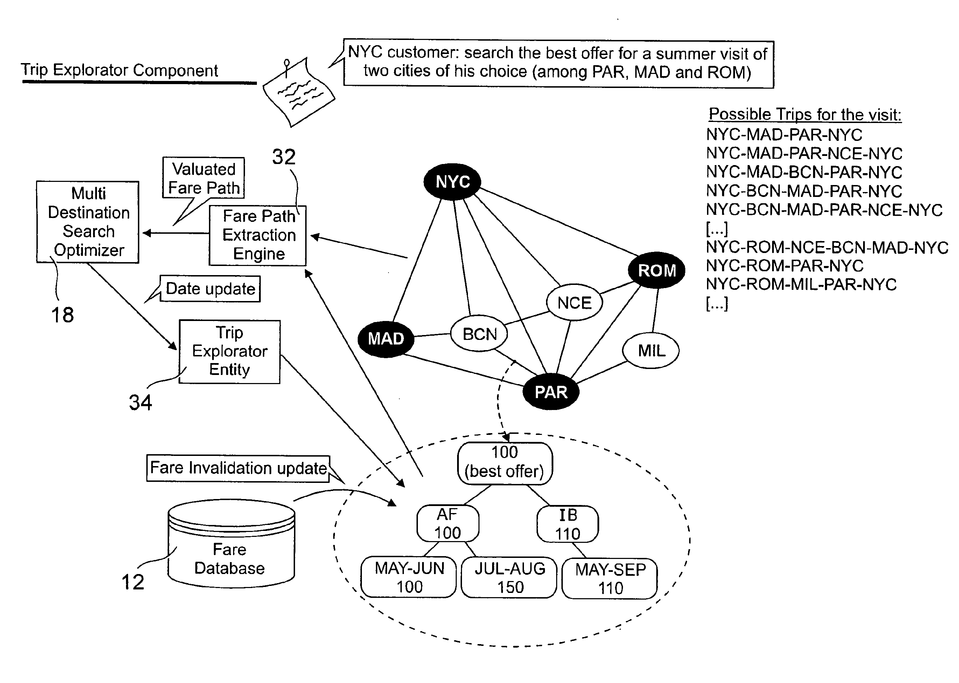

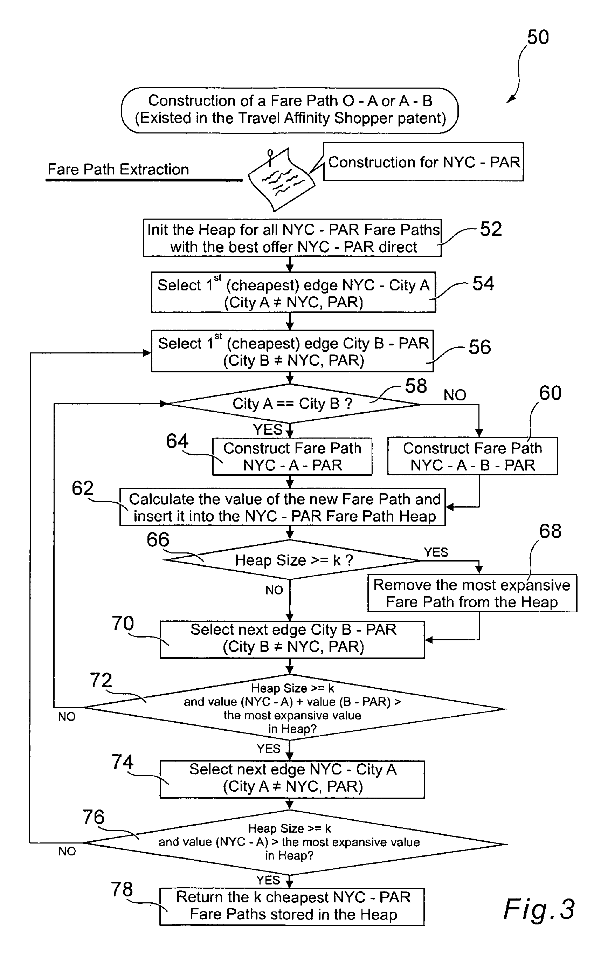

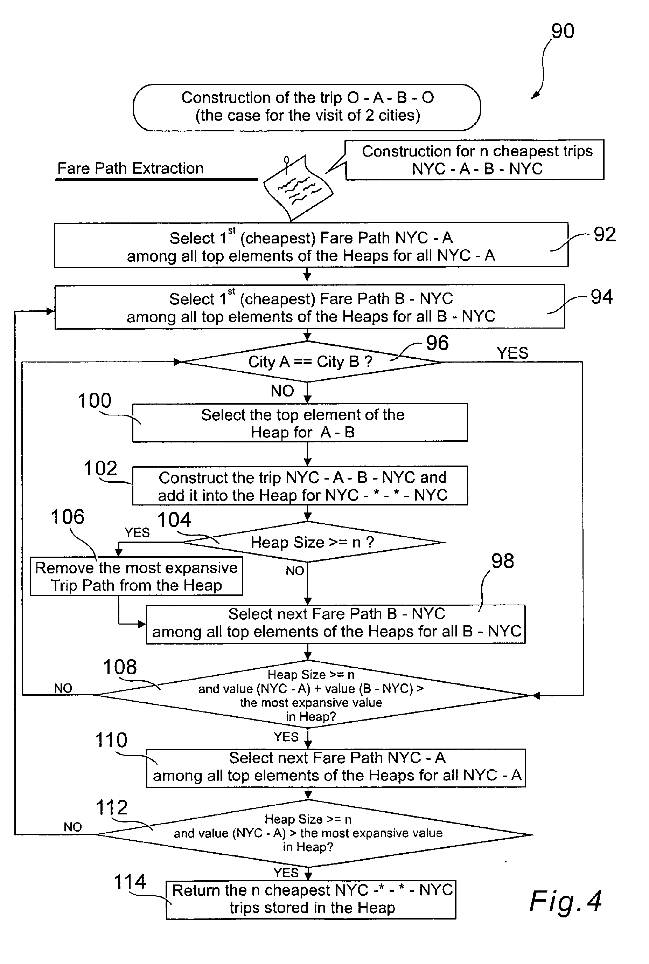

The block diagram 10 of Figure 1 shows the main functional components of the present invention. The main functional components comprise a fare database 12, which contains data on all possible flights, and a flight and availability database 14, which contains data regarding which of the possible flights are bookable at a particular time having regards to factors such as reservations already made and cancelled or re-scheduled flights. Each of the fare database 12 and the flight and availability database 14 are constituted in data storage forming part of a server computer apparatus. The main functional components also comprise a trip explorator component 16, which is operative to fetch data on legs of a trip from the fare and availability databases 12, 14 including the fares and circumstances of travel, such as departure and arrival airports, departure and arrival times, etc., and a multi-destination search optimiser 18, which is operative to construct an optimised selection of possible trips based on operation of the trip explorator component 16. The trip explorator component 16 and the multi-destination search optimiser 18 are constituted in software in the C programming language that is stored in memory associated with the server computer apparatus and run on a processor of the server computer apparatus. The operation of the trip explorator component 16 and the multi-destination search optimiser 18 will be described below in detail with reference to Figures 3 and 4. As shown in Figure 1, communication between and amongst the above identified components is by way of a communication layer 22. Communication between the server computer apparatus and each of a plurality of client computer apparatus is by way of the internet 24. For reasons of clarity Figure 1 shows only one client computer apparatus 26. The client computer apparatus 26 comprises a general purpose computer having a data input device, such as a keyboard, and a data output device, such as a Video Display Unit (VDU) or printer. The client computer apparatus 26 is typically present at a travel retailer's premises and is used to enter customer requirements for a planned trip and to output the optimised selection of possible trips following processing at the server computer apparatus.

Operation in general terms of the main functional components of Figure 1 with a specific example is shown in Figure 2. As can be seen from Figure 2, the fare database 12 and the multi-destination search optimiser 18 are shown. Also shown in Figure 2 are a fare path extraction engine 32 and a trip explorator entity 34, which together form part of the trip explorator component 16 shown in Figure 1. The trip explorator entity 34 is operative to update flight data, such as to take account of unavailable flights that have already been booked. The fare path extraction engine 32 is operative to extract legs and trips from the fare database 12. In use, a customer at the travel retailer's premises provides his or her travel requirements. For example, the customer might specify that he or she wishes to book a trip departing from and returning to New York (NYC) with a stop-over in each of two of Paris (PAR), Madrid (MAD) and Rome (ROM) with the trip to be taken sometime during the summer, i.e. between May and September. A partial and much shortened list of possible trips for the visit is shown in the top right hand corner of Figure 2. Possible trips include New York to Madrid to Paris to New York with the Paris to New York leg being direct and New York to Madrid to Paris to New York with the Paris to New York being indirect with a connection at Nice (NCE). Thus, it can be appreciated that the total number of possible trips can be very significant when such factors as flights provided by different carriers, different lengths of stay at the intermediate destinations, e.g. two to four nights stay, different classes of travel, etc are taken into account. The customer requirements are input to the client computer apparatus 26 and conveyed via the internet 22 to the server computer apparatus where an optimised selection of possible trips is constructed having regards to the customer requirements. The optimised selection of possible trips is then conveyed via the internet 22 to the client computer apparatus 26 for display to the customer. The customer then reviews the selection of possible trips and selects a particular trip before making a booking.

The construction of the optimised selection of possible trips will now be described with reference to Figures 3 and 4. Figure 3 is a flow chart representation 50 of a first part of the method according to the present invention, in which a list of candidate options for each leg of a trip is constructed. For the example given above of a trip consisting of travel from New York to Madrid to Paris to New York, candidate options would be constructed for each of the New York to Madrid leg, the Madrid to Paris leg and the Paris to New York leg. Figure 3 shows how candidate options are constructed for one leg, namely New York (NYC) to Paris (PAR). The first step 52 involves creating a heap data structure for all available New York to Paris direct flights with the heap being ordered according to flight cost. Flight details processed according to the method represented in Figure 3 are fetched from the fare database 12 by operation of the fare path extraction engine 32. Next the lowest cost New York to connecting city A flight is selected 54 and the lowest cost connecting city B to New York flight is selected 56. Thereafter it is determined whether or not city A is the same as city B 58. If not, a leg consisting of travel from New York to Paris via cities A and B is constructed 60 and the value of the constructed leg is inserted into the heap 62. If so, a leg consisting of travel from New York to Paris via city A only is constructed 64 and the value of the constructed leg is inserted into the heap 62. Then the heap size is compared 66 with a predetermined number k, which in the present example is seventy-five. If the heap size is greater than or equal to the predetermined number k the most expensive leg is removed from the heap 68. Then the next lowest cost connecting city B to New York flight is selected 70. Thereafter it is determined if the heap size is greater than or equal to the predetermined number k and if sum of the value of the fare for the New York to connecting city A flight and the value of the fare for the connecting city B to New York flight is greater than the most expensive value in the heap 72. If not, steps 58 to 72 are repeated. If so, the next lowest cost New York to connecting city A flight is selected 74 and it is determined if the heap size is greater than or equal to the predetermined number k and if the value of the fare for the New York to connecting city A flight is greater than the most expensive value in the heap 76. If not, the next lowest cost connecting city B to Paris flight is selected and steps 58 to 74 are repeated. If so, the first part of the method concludes with a predetermined number of flights, i.e. k flights, for the New York to Paris leg being returned from the heap as the candidate leg options 78. The steps of Figure 3 are repeated for each leg of the proposed trip. Hence a cost sorted heap is constructed for each of the three legs in the example given above. It is to be noted that the setting of the predetermined number k of flights contained in each of the sorted heaps imposes a limit on the number of computations involved in constructing the optimised selection of possible trips in the second part of the method, which is described below.

Figure 4 is a flow chart representation 90 of a second part of the method according to the present invention, in which the optimised selection of possible trips is constructed based on the candidate options for each leg. In Figure 4 references to A and B are to the intermediate destinations, e.g. Paris and Madrid in the example given above, whereas City A and City B in Figure 3 are to connecting cities. As a first step in the method of Figure 4, the lowest cost leg between New York and intermediate destination A is selected from the heap for the New York to intermediate destination A candidate leg options 92. Next the lowest cost leg between intermediate destination B and New York is selected from the heap for the intermediate destination B and New York candidate leg options 94. Thereafter it is determined whether or not intermediate destinations A and B are the same 96. If so, the next lowest cost leg between intermediate destination B and New York is selected from the appropriate heap 98. If not, the lowest cost leg from the heap for the intermediate destination A to intermediate destination B candidate leg options is selected 100. Then a trip from New York to intermediate destination A to intermediate destination B to New York is constructed based on the selected intermediate destinations and the constructed trip is included in a heap for the constructed trips 102. Then it is determined if the number of constructed trips in the heap is greater than or equal to a predetermined number n 104. If so, the most expensive trip is removed from the constructed trips heap 106. Thereafter, the step of selecting the next lowest cost leg between intermediate destination B and New York from the appropriate heap 98 is carried out. If not, the method proceeds immediately with the step of selecting the next lowest cost leg between intermediate destination B and New York from the appropriate heap 98. Next if the size of the heap for the constructed trips is greater than or equal to the predetermined number and the sum of the value of the selected New York to intermediate destination A leg and the value of the selected intermediate destination to New York leg is greater than the most expensive value in the heap 108, the next lowest cost New York to intermediate destination A candidate leg is selected from the appropriate heap 110. If not, steps 96 to 108 are repeated until the condition of step 108 is met. Thereafter it is determined if the size of the heap for the constructed trips is greater than or equal to the predetermined number and the value of the selected candidate leg from New York to intermediate destination A is more expensive than the most expensive value in the heap 112. If not, the next lowest cost candidate option is selected from the heap containing the candidate options for the intermediate destination B to New York leg 94 and steps 100 to 112 are repeated until the condition of step 112 is met. When the condition of step 112 is met the method of Figure 4 concludes with the return of the predetermined number of trips, i.e. n trips, from the heap for the constructed trips 114. It is to be noted that the setting of the predetermined number n of trips contained in the constructed trips heap imposes a limit on the number of computations involved in constructing the optimised selection of possible trips.

The method of the present invention finds application in several different ways. For example, the method can be used to determine the lowest cost options for a trip from an origin airport to several specified destinations that may be visited in any order with a limit being placed on the length of stay at each destination, e.g. two nights at each destination. Alternatively, the method can be used to determine the lowest cost options for a trip from an origin airport to a specified number of cities the cities being any ones from a list of possible cities, such as any two cities from all European capital cities. Alternatively, the method can be used to present alternatives to a specified itinerary. For example, for a specified itinerary of New York to London to Paris to New York with a four day stay in London and a three day stay in Paris, the method could be used to present less expensive options for different lengths of stay at the London and Paris intermediate destinations.

## Claims

1. A method of selecting at least one trip from a plurality of possible trips, each of the plurality of possible trips being for travel from an origin location and comprising stops at a plurality of destinations, the method being performed in computer apparatus configured to execute the method, the method comprising:
determining a fare for each of a plurality of different leg options for each leg, each leg being between one of: the origin location and a destination; and two destinations;
selecting a plurality of candidate leg options for each leg based on comparative amounts of the determined fares, the plurality of candidate leg options being fewer in number than the plurality of different leg options; and
determining at least one trip based on the plurality of candidate leg options for each leg.

2. The method according to claim 1, in which the plurality of destinations comprises at least one intermediate destination and a final destination.

3. The method according to claim 1 or 2, in which the plurality of destinations comprises a plurality of intermediate destinations and a final destination, the final destination being the same as the origin location.

4. The method according to any preceding claim, in which the step of determining a fare for each of a plurality of different leg options comprises determining a fare for each of different leg options between the origin location and each of the plurality of destinations and between different pairs of destinations.

5. The method according to any preceding claim, in which the selected plurality of candidate leg options for each leg are the least expensive of the different leg options.

6. The method according to any preceding claim, in which a predetermined number of candidate leg options are selected from the different leg options for each leg.

7. The method according to any preceding claim, in which the steps of determining a fare and selecting a plurality of leg options are executed at a same time whereby candidate leg options are selected as fares for different leg options are being determined.

8. The method according to any preceding claim, in which the step of determining a fare for each of different leg options between different destinations is executed in dependence on identities of the origin location and a final destination.

9. The method according to any preceding claim, in which the step of determining at least one trip comprises determining a plurality of trips based on the plurality of candidate leg options for each leg.

10. The method according to claim 9, in which a plurality of candidate trips is selected from the determined plurality of trips, the plurality of candidate trips being smaller in number than the determined plurality of trips.

11. The method according to claim 10, in which the steps of determining a plurality of trips and selecting a plurality of candidate trips are executed at a same time whereby candidate trips are selected as trips based on candidate leg options are determined.

12. The method according to any preceding claim, in which the method comprises operating on a heap data structure formed in respect of at least one of the candidate leg options for the legs and the plurality of trips determined from the plurality of candidate legs.

13. The method according to any preceding claim, in which the method further comprises receiving length of stay data relating to a predetermined length of stay at at least one of the destinations.

14. A computer program, which is at least one of embodied on a computer readable storage medium and carried on an electrical carrier signal, the computer program comprising computer executable code for causing computer apparatus to execute a method of selecting at least one trip from a plurality of possible trips, each of the plurality of possible trips being for travel from an origin location and comprising stops at a plurality of destinations, the method comprising the steps of:
determining a fare for each of a plurality of different leg options for each leg, each leg being between one of: the origin location and a destination; and two destinations;
selecting a plurality of candidate leg options for each leg based on comparative amounts of the determined fares, the plurality of candidate leg options being fewer in number than the plurality of different leg options; and
determining at least one trip based on the plurality of candidate leg options for each leg.

15. Computer apparatus operable to select at least one trip from a plurality of possible trips, each of the plurality of possible trips being for travel from an origin location and comprising stops at a plurality of destinations, the computer apparatus being configured to:
determine a fare for each of a plurality of different leg options for each leg, each leg being between one of: the origin location and a destination; and two destinations;
select a plurality of candidate leg options for each leg based on comparative amounts of the determined fares, the plurality of candidate leg options being fewer in number than the plurality of different leg options; and
determine at least one trip based on the plurality of candidate leg options for each leg.
